# EUROPEAN PATENT APPLICATION

(11) **EP 1 198 128 A2**
(43) Date of publication of application: **17.04.2002**
(21) Application number: 01305678.3
(22) Date of filing: 29.06.2001
(51) Int. Cl.: H04N 5/45

(54) **Video production apparatus and video reproduction method**

(30) Priority: 30.06.2000 JP 2000199077
(71) Applicant: Pioneer Corporation, Tokyo-to (JP)
(72) Inventor: Mizumura, Yukari, c/o Pioneer Corporation, Yamada, Kawagoe-shi, Saitama-ken (JP); Sato, Hitoshi, c/o Pioneer Corporation, Yamada, Kawagoe-shi, Saitama-ken (JP); Yamashita, Rie, c/o Pioneer Corporation, Yamada, Kawagoe-shi, Saitama-ken (JP); Morita, Kenji, c/o Pioneer Corporation, Yamada, Kawagoe-shi, Saitama-ken (JP); Murata, Toshiyuki, c/o Pioneer Corporation, Yamada, Kawagoe-shi, Saitama-ken (JP); Yamaguchi, Hidetoshi, c/o Pioneer Corporation, Yamada, Kawagoe-shi, Saitama-ken (JP)
(74) Representative: Townsend, Victoria Jayne

(57) **Abstract**

In a video reproduction apparatus, OSD data indicative of information about a title and chapters are superposed on a video accompanied by captions serving as a sub-video. The display position of a caption is first determined, then a position at which the OSD data should be displayed is set so as not to overlap with the caption. In the first display pattern, the caption-display position is located nearest to the lower side of the screen, while the OSD-display position nearest to the upper side thereof. In the second display pattern, the caption-display position is located nearest to the upper side of the screen, while the OSD-display position nearest to the lower side thereof. In the third display pattern, the caption-display position is located nearest to the right side of the screen, while the OSD-display position nearest to the left side thereof. Accordingly, both caption and OSD data can be seen with no obstacles, providing video display with superior visibility.

## Description

### BACKGROUND OF THE INVENTION

The present invention relates to a video display technique for processing video signals so as to display the processed video signals on a screen, and in particular, to a video display apparatus and a video display method for not only displaying a main video and a sub-video on the same screen with the sub-video superposed on the main video but also displaying OSD (On Screen Display) data representing predetermined information on the screen.

Conventionally, there have been widely known video reproduction apparatuses to reproduce coded video and audio information recorded in a recording medium. In recent years, as a larger-capacity recording medium for memorizing video information, DVDs are now the focus of public attention. In a video reproduction apparatus that uses a DVD as its recording medium, in response to load of a DVD in which video information is recorded, the apparatus operates as follows. The apparatus reads out coded video and audio information, codes the read information, and outputs the coded information to a display device such as a monitor.

In such DVDs, it is possible that sub-video data including character information such as a caption are recorded in addition to main video data composed of video such as a movie. To reproduce data stored in such DVDs, it is usual for a reproduction apparatus to display images by superposing for example captions on video information. Such a reproduction apparatus also has an OSD (On Screen Display) function. This function makes it possible to display, in a superposition manner, information about management of reproduction information including the title and chapters of a disc; information about control of reproduction modes including repeated reproduction and random reproduction; and an OSD character string relating to reproduction other than reproduced information, such as control information showing reproduced outputs (such as volume of sound to be reproduced) on the screen. For example, by performing a predetermined operation, a user can have an OSD character string displayed selectively on a displayed screen showing desired information.

In the above conventional reproduction apparatus, it can be supposed that the caption based on the sub-video data and the OSD character string based on the OSD function are displayed at the same time. In this case, the displayed caption is located appropriately with the consideration of states of video to be displayed, but the OSD character string is displayed at a certain position with no such consideration. Accordingly, it frequently happens that both of the caption and the OSD character string are superposed one on another on a displayed screen. In particular, in the case that the OSD character string is displayed in response to a user's operation, the OSD character string is mapped at a predetermined position in preference to whether or not there is a caption that has already been displayed. Therefore, there is the fear that this mapping makes it impossible to recognize the displayed caption. Owing to the fact that both of the caption based on the sub-video data and the OSD character string based on the OSD function are separately controlled at their displayed positions, the conventional technique faces the problem that visibility for users is deteriorated.

### SUMMARY OF THE INVENTION

The present invention has been made with consideration of the foregoing inconvenience. Accordingly, an object of the present invention is to provide a video reproduction apparatus and an video reproduction method capable of displaying video with superior visibility by making a screen on which sub-video data, such as a caption, and an OSD character string are displayed separately from each other in position, even when it is required that both of the caption and the OSD character string be displayed simultaneously in displaying video.

According to one aspect of the present invention, a video reproduction apparatus is provided. The apparatus is used for not only reproducing a video signal comprising a main video and a sub-video to display the video signal but also outputting OSD (On Screen Display) data indicative of predetermined information to display the OSD data. The apparatus comprises a determining device for determining a display position of the sub-video on a displayed screen; an OSD-display position setting device for setting an OSD-display position of the OSD data so as not to overlap with the display position of the sub-video; and a superposing device for superposing, on the main video, not only the sub-video at the display position thereof but also the OSD data at the OSD-display position.

According to another aspect of the present invention, a video reproduction method is provided. According to the method, a video signal comprising a main video and a sub-video is reproduced to display the video signal and OSD (On Screen Display) data indicative of predetermined information are outputted to display the OSD data. The method comprises the steps of: determining a display position of the sub-video on a displayed screen; setting an OSD-display position of the OSD data so as not to overlap with the display position of the sub-video; and superposing, on the main video, not only the sub-video at the display position thereof but also the OSD data at the OSD-display position.

As described above, the display position of a sub-video included in a video signal is determined on the display screen, then the display position of OSD date are set so as not to overlap with the sub-video. Each of the sub-video and the OSD data is then located at each of the predetermined display positions on a main video screen. Therefore, the sub-video and OSD data do not overlap with each other on the screen, providing video display with superior visibility.

In the above configurations, it is preferred that the sub-video is a caption on the main video.

Thus, in the case that a movie is reproduced, a position at which OSD data is displayed is designated so as not to overlap with captions of the movie. With the OSD data displayed on the screen, the captions can be read without failures.

It is also preferred that the OSD-display position setting device is configured so as to select a certain OSD-display position from a plurality of pre-specified OSD-display positions. It is also preferred the OSD-display position setting step is selecting a certain OSD-display position from a plurality of pre-specified OSD-display positions.

According to those configurations, a plurality of OSD-display positions are prepared, and from those positions, a display position of a sub-video which does not overlap with each other is selectively specified. Thus, without making the processing complicated, an appropriate OSD-display position can be specified with ease.

Preferably, the OSD-display position setting device is configured so as to set the OSD-display position at a side facing to the display position of the sub-video on the displayed screen.

It is also preferred that the OSD-display position setting step is setting the OSD-display position at a side facing to the display position of the sub-video on the displayed screen.

Thus, the relationship between the display position of a sub-video and the OSD-display position is determined such that they are separated into both mutually faced sides on the screen. For example, the sub-video and OSD data are displayed in a separate form at upper and lower positions, right-hand and left-hand positions, or others on the screen. This leads to more excellent visibility and well-balanced display.

Also, preferred is that the video reproduction apparatus further comprises an operating device used for giving instructions to a display condition of the OSD data, wherein the OSD-display position setting device is configured so as to set the OSD-display position on the basis of the instructions provided from the operating device.

This configuration makes it possible to specify states of displayed OSD data through the operating device, so that the OSD-display position can be set with a predetermined operation given to the operating device. The OSD-display position can be adjusted according to user's desires in order to gain higher visibility.

### BRIEF DESCRIPTION OF THE DRAWINGS

In the accompanying drawings:
FIG. 1 is a block diagram showing an outlined configuration of a DVD reproduction apparatus according to an embodiment of the present invention;
FIG. 2 is a flowchart showing a displaying process performed in the DVD reproduction apparatus according to the embodiment;
FIGS. 3(A) to 3(C) show display positions of captions on screens in the present embodiment;
FIGS. 4(A) to 4(C) are illustrations showing display positions of OSD character strings on screens in the present embodiment;
FIGS. 5(A) to 5(C) illustrate displayed states of the first pattern to the third pattern in the present embodiment;
FIGS. 6(A) to 6(C) illustrate display positions of OSD character strings, which are different from those in FIGS. 5(A) to 5(C), in the present embodiment; and
FIGS. 7(A) to 7(C) illustrate displayed states of the first to third patterns corresponding to FIGS. 6(A) to 6(C) in the present embodiment.

### DETAILED DESCRIPTION OF THE PREFERRED EMBODIMENT

With reference to the drawings, a preferred embodiment of the present invention will now be explained.

In the following embodiment, the present invention will be applied to a DVD reproduction apparatus, wherein a disc in which data according to a DVD format are recorded is loaded in the DVD reproduction apparatus to reproduce video signals through a display device thereof.

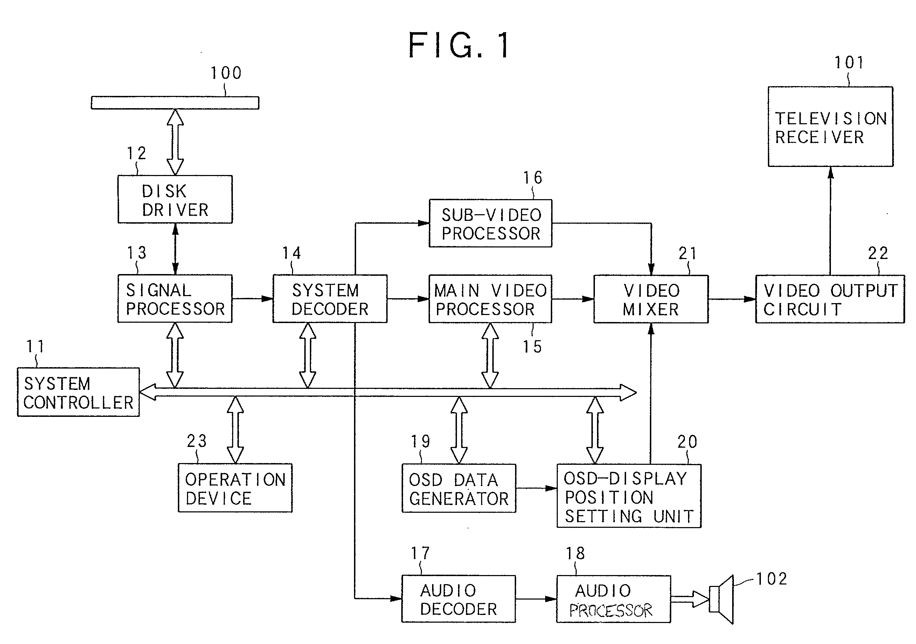

FIG. 1 is a block diagram showing an outlined configuration of the DVD reproduction apparatus concerning the present embodiment. The DVD reproduction apparatus shown in FIG. 1 is equipped with a system controller 11, a disc driver 12, a signal processor 13, a system decoder 14, a main video processor 15, a sub-video processor 16, an audio decoder 17, an audio processor 18, an OSD data generator 19, an OSD-display position setting unit 20, a video mixer 21, a video output circuit 22 and an operation device 23. The DVD reproduction apparatus equipped with the above constituents will read data recorded on a disc 100 loaded in the apparatus, and outputs video signals to a television receiver 101 placed outside the apparatus and electrically connected therefrom.

In FIG. 1, the system controller 11 controls the overall operation of the DVD reproduction apparatus concerning the present embodiment. The system controller 11 sequentially performs the steps of a control program to control each of the constituents of the DVD apparatus by sending out control signals to those constituents. The constituents are mutually connected to the apparatus through a bus.

The disc driver 12 enables a pickup (not shown) to irradiate a light beam onto the disc 100 loaded in the DVD reproduction apparatus. Recorded data on the disc 100 are read based on its reflected light in the disc driver 12. The read-out signals outputted from the disc driver 12 are sent to the signal processor 13, in which the signals undergo various types of processing such as error correction processing.

The output signals from the signal processor 13 are supplied to the system decoder 14, wherein the inputted signals are divided into main video data, sub-video data and audio data. In addition, decoding processing according to the MPEG (Moving Picture Image Coding Experts Group) format is performed to the main video data. Of the data outputted from the system decoder 14, the main video data are supplied to the main video processor 15, the sub-video data are supplied to the sub-video processor 16 and the audio data are supplied to the audio decoder 17.

The main video processor 15 performs control processing required for displaying the inputted main video data, while the sub-video processor 16 performs control processing on the inputted sub-video data, the processing being required to display a sub-video suitable for a main video. Moreover, the audio decoder 17 performs on the inputted audio data audio decoding processing in compliance with a predetermined rule to produce a decoded audio signal. The decoded audio signal is then supplied to a speaker 102, where the signal is outputted outside as voice. The speaker 102 is, for instance, attached to the later-described television receiver 101 as one unit.

Under instructions from the system controller 11, the OSD data generator 19 generates OSD data corresponding to a character string that should be displayed as part of video. The OSD data outputted from the OSD data generator 19 are supplied to the OSD-display position setting unit 20. This setting unit 20 carries out later-described processing, with the result that a display position that removes the overlap with a caption on a displayed screen is selectively specified. The specification of display positions of the OSD data will be detailed later. The OSD data mean information displayed on a screen, which include information about management of reproduction information, such as the title and chapters of a disc; information about control of reproduction methods, such as repeat reproduction and random reproduction; and display information about reproduction, but not for reproduced information, such as control information showing reproduced outputs such as volume of sound to be reproduced.

The video mixer 21 mixes the main video data outputted from the main video processor 15 with the sub-video data outputted from the sub-video processor 16, and further mixes such mixed data with the OSD data outputted from the OSD data generator 19 via the OSD-display position setting unit 20. Thus, the mixing carried out by the video mixer 21 will generate a video signal to be displayed. The video signal is then sent to the video output circuit 22, at which the signal is converted into its analog signal. The converted signal is then sent to the television receiver 101, which is connected with this apparatus through a connecting cable and others. Accordingly, in the television receiver 101, a screen is displayed on which a sub-video such as a caption and an OSD character string indicated by the OSD data are superposed on a main video.

The operation device 23 serves as an operating device to control the operation of this DVD reproduction apparatus in response to user's operations. Particularly, in the present invention, a user is able to operate the operation device 23 in a specific manner, so that displayed states of the OSD data indicating various kinds of information can be controlled as will be described later.

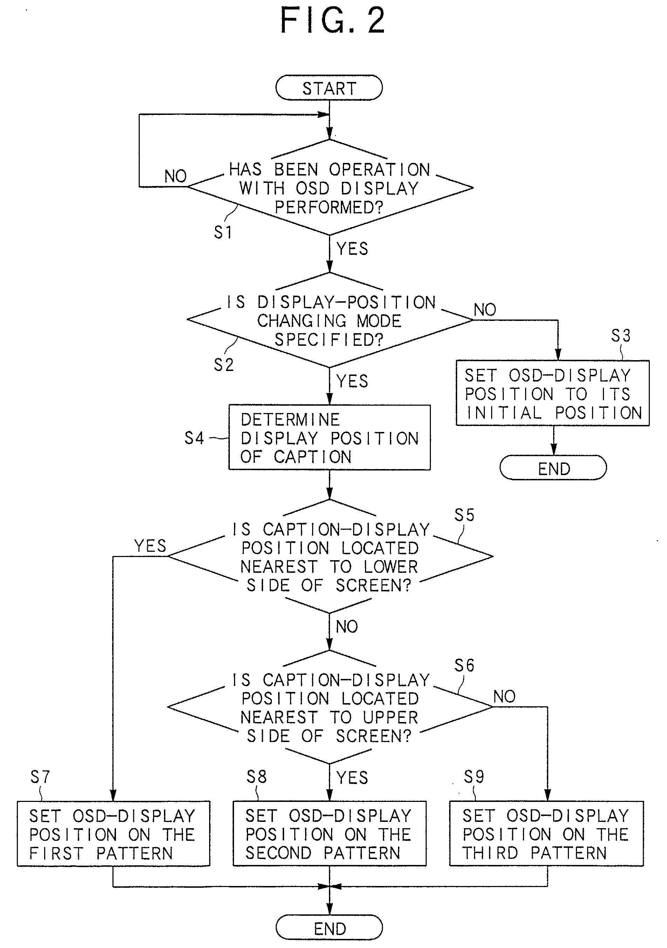

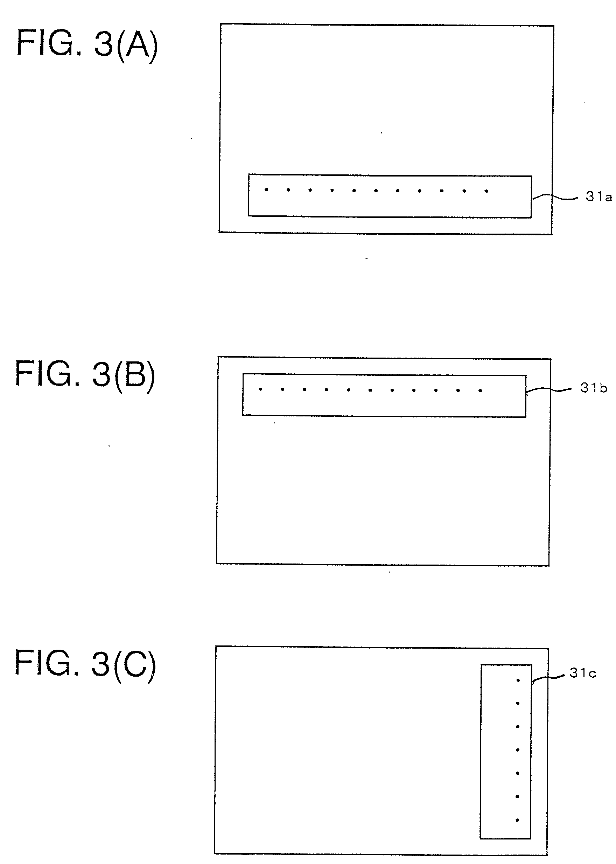

With reference to FIGS. 2-7(A) to 7(C), the display processing performed in the DVD reproduction apparatus of the present embodiment will now be explained. FIG. 2 is a flowchart that shows such display processing and FIGS. 3-7(A) to 7(C) illustrate a caption formed of sub-video data and an OSD character string formed of OSD data, both of which are shown on a screen displayed by the television receiver 101.

In the DVD reproduction apparatus, when the display processing shown in FIG. 2 is activated, it is determined whether or not a user has performed an operation accompanied by an OSD-display operation (step S1). The present invention provides a user with an environment in which, if the user wants to display title information on the screen, the user can give the operation device 23 operations necessary for its OSD display. Thus, to monitor operated conditions of the operation device 23 is continued until the user performs an operation accompanied by an OSD-display operation (NO at step S1).

If the determination at step S1 shows that the operation accompanied by the OSD-display operation has been done (YES at step S1), it is then determined whether or not a display-position, changing mode is established (step S2). The display-position changing mode is a mode under which the position of OSD data to be displayed on a screen is changeable suitably according to the processing described later. The present embodiment provides two modes for displaying OSD data. One is the display-position changing mode under which a later-described OSD-display position can be changed, as described above. The other is a display-position fixing mode under which OSD data are fixedly displayed at a predetermined initial position. In response to a user's desired operation done toward the operation device 23, desired either one mode can be specified.

In the case that it is determined at step S2 that the mode is set to the display-position fixing mode (NO at step S2), the OSD-display position is set to its initial locations fixed in advance in a lower-side area or a left-side area on the screen (step S3). The processing in FIG. 2 will then be terminated without performing processing at steps S4 to S9.

In contrast, when it is found that the mode is set to display-position changing mode through the determination at step S2 (step S2; YES), a caption formed of the sub-video data is further determined in its position (step S4). To be specific, the position at which the caption is displayed on the screen can be determined by referring to SET_DAREA (Sets Display Area of Pixel Data) contained in a display-control command recorded on the disc 100.

Display positions of a caption on the screen will now be explained using FIGS. 3(A) to 3(C) showing three examples of such display. FIG. 3(A) shows one caption-display position 31a that has the caption displayed at a lower position on the screen, FIG. 3(B) shows another caption-display position 31b that has the caption displayed at an upper position on the screen, and FIG. 3(C) shows another caption-display position 31c that has the caption displayed at a right-side position on the screen. At each of the caption-display positions 31a to 31c, a predetermined character string, such as words of a movie, is mapped, as pictorially shown by dots in each figure. In this way, according to the contents recorded on the disc 100, an appropriate position will selectively be determined from the caption-display positions 31a to 31c.

When the determination result at step S4 shows that the caption-display position 31a is located nearest to the lower side of the screen (YES at step S5), the OSD-display position is set based on the first pattern later described (step S7). In contrast, when the determination is NO at step S5, it is then determined if or not the caption-display position is located nearest to the upper side of the screen, that is, the position 31b. When the determination at step S6 is YES, the OSD-display position is set based on the second pattern later described (step S8). When it is determined that the caption-display position is located nearest to the right-hand side of the screen, that is, the position 31c (NO at step S6), the OSD-display position is set based on the third pattern later described (step S9). After performing the process at any of the steps S7 to S9, the processing shown in FIG. 2 will be terminated. Whenever the operation accompanied by an OSD-display operation is newly performed, the processing of FIG. 2 will be repeated.

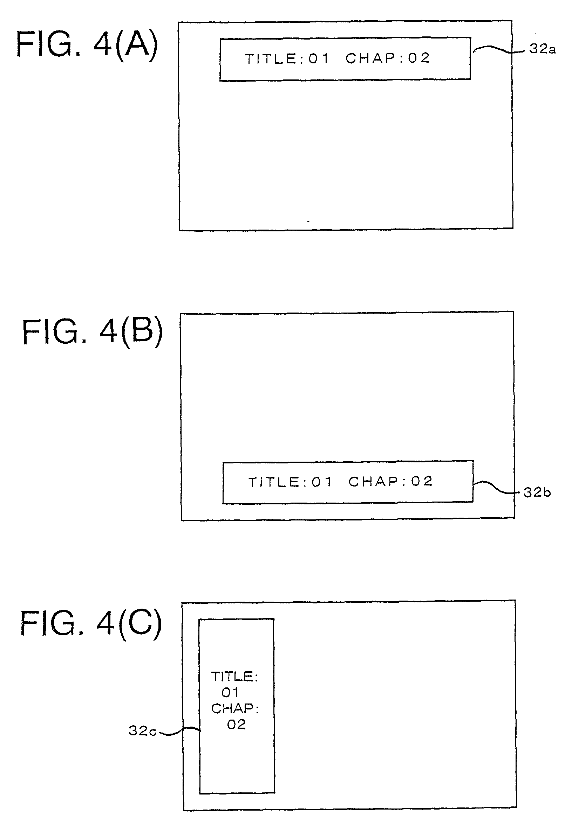

Positions for displaying the OSD character string on a screen will now be described using FIGS. 4(A) to 4(C). FIGS. 4(A) to 4(C) illustrate three display positions of the OSD character string employed in the present embodiment. FIG. 4(A) shows an OSD-display position 32a, that is, an upper position on the screen, at which an OSD character string is displayed. FIG. 4(B) shows an OSD-display position 32b, that is, a lower position on the screen, at which an OSD character string is displayed. Further, FIG. 4(C) shows an OSD-display position 32c, that is, a left-side position on the screen, at which an OSD character string is displayed. The OSD-display position setting unit 20 selects and sets a desired one from the three OSD-display positions 32a to 32c in compliance with conditions later described. To specify an area enclosing each of the OSD-display positions 32a to 32c, it is required that coordinates in the X- and Y-directions on the screen be computed and memorized.

The OSD character string displayed at each of the OSD-display positions 32a to 32c shown in FIGS. 4(A) to 4(C) includes title information and chapter information. At each position, the letters "TITLE" showing the title information are displayed with its title number and the letters "CHAP" which shows the chapter information are displayed with its chapter number. If a user wants to check the title and chapters of a certain disc 100, the user performs a predetermined operation. This operation makes the OSD title generator 19 to generate OSD data indicative of title information and chapter information, thereby providing, for example, a display state shown in any of FIGS. 4(A) to 4(C). By way of example, at the OSD-display positions 32a and 32b shown in FIGS. 4(A) and 4(B), the OSD character string is displayed by one line, because each position is longer in the lateral direction. On the other hand, at the OSD-display position 32c shown in FIG. 4(C), the OSD character string is displayed over multiple lines, because the position is longer in the longitudinal direction.

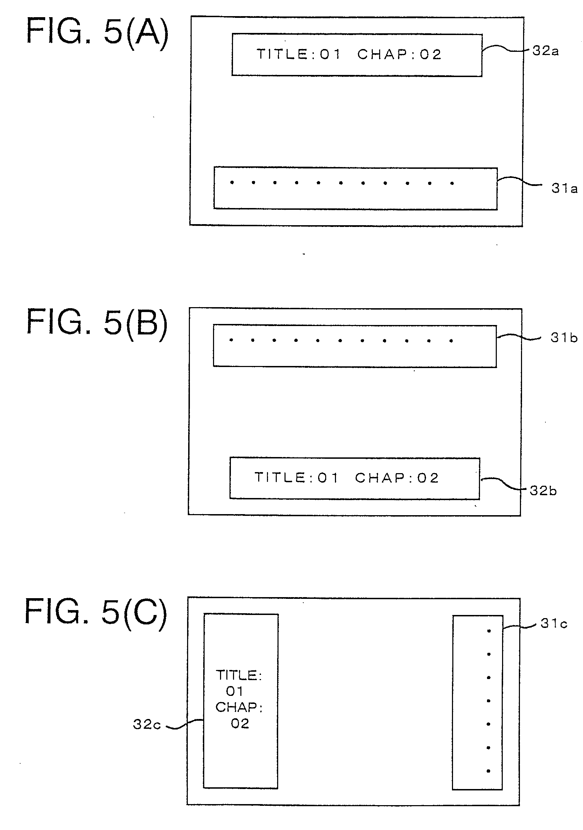

Referring to FIGS. 5(A) to 5(C), the first to third patterns for display modes, which are set at steps S7 to S9 in FIG. 2, will now be described. In the present embodiment, both caption and OSD character string are displayed simultaneously, in which any of the OSD-display positions 32a to 32c is chosen not to overlap with any of the caption-display positions 31a to 31c. Hence the screen is displayed with superior visibility.

FIG. 5(A) illustrates the first pattern of display mode set in step S7. As shown in FIG. 5(A), the caption-display position 31a is located nearest to a lower side of the screen and the OSD-display position 32a is located nearest to an upper side of the screen. That is, if the determined result at step S4 is that a caption is displayed nearest to the lower side of the screen, the OSD character string is made to be displayed nearest to the upper side of the screen. Accordingly, both of the caption and the OSD character string are arranged not to overlap with each other.

FIG. 5(B) illustrates the second pattern of display mode set in step S8. As shown in FIG. 5(B), the caption-display position 31b is located nearest to an upper side of the screen and the OSD-display position 32b is located nearest to a lower side of the screen. That is, if the determined result at step S4 is that a caption is displayed nearest to the upper side of the screen, the OSD character string is made to be displayed nearest to the lower side of the screen. Accordingly, both of the caption and the OSD character string are arranged not to overlap with each other.

FIG. 5(C) illustrates the third pattern of display mode set at step S9. As shown in FIG. 5(C), the caption-display position 31c is set to a right-side position on the screen and the OSD-display position 32c is set to a left-side position on the screen. That is, if the determined result at step S4 is that a caption is displayed at the right-side position on the screen, the OSD character string is made to be displayed at the left-side position on the screen. Accordingly, both of the caption and the OSD character string are arranged not to overlap with each other.

Thus, in any of the first to third patterns shown in FIGS. 5(A) to 5(C), the arrangement is made such that the caption-display position 31a (to 31c) does not overlap with the OSD-display position 32a (to 32c). Therefore, when a user wants to display OSD data during appreciation of a movie with captions reproduced by the disc 100, the captions are prevented from being obstructed by OSD data on the television receiver 101. Both captions and OSD data can be seen clearly.

In addition, as understood from FIGS. 5(A) to 5(C), each of the OSD-display positions 32a to 32c is located at the side facing to each of the caption-display positions 31a to 31c on the screen. Therefore, compared to the manner that both of the OSD-display position and the caption-display position are displayed closer to each other, more superior visibility can be provided and well balanced display on the screen can be provided.

As one modification, the display processing shown in FIG. 2 is able to have the function that makes a user to operate the operation device 23 so as to arbitrarily specify the OSD-display position. By this specification, the OSD-display position on the screen can finely be adjusted according to user's desires, resulting in that visibility can be raised more.

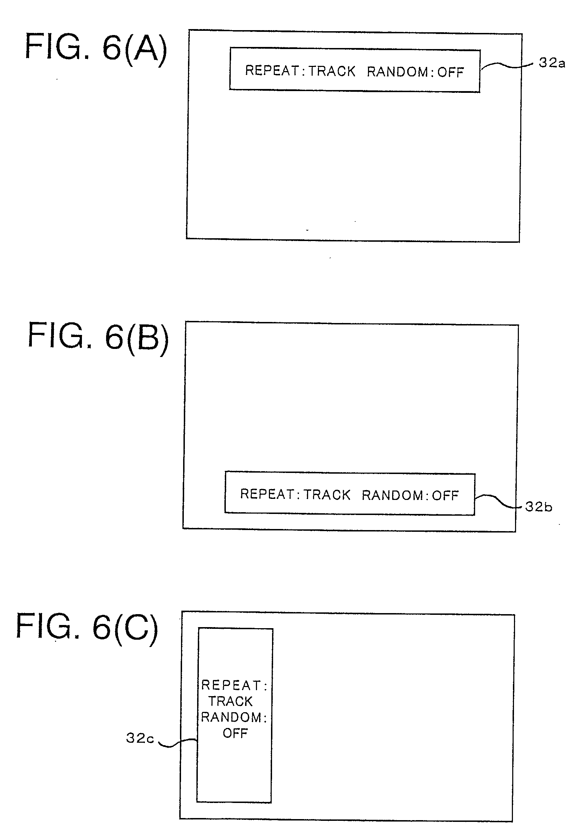

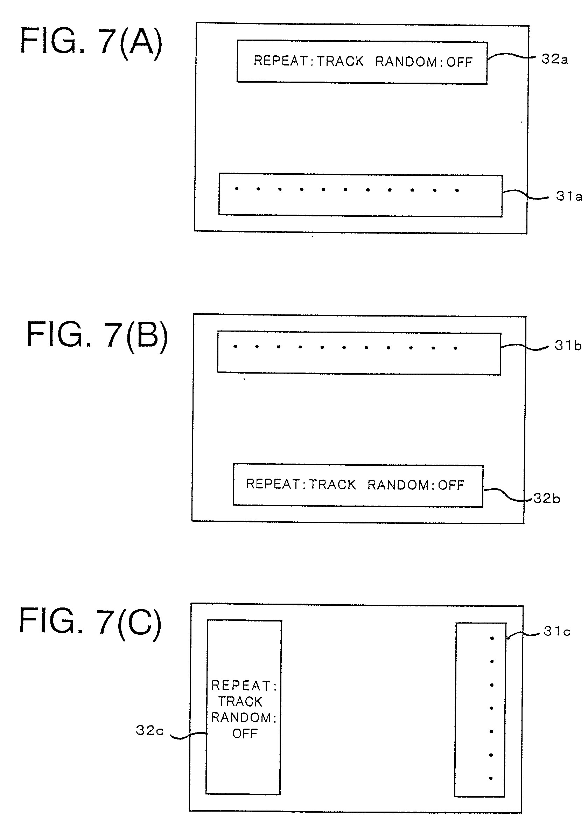

FIGS. 6(A) to 6(C) and 7(A) to 7(C) show other modified examples, in which the OSD character string described in the above embodiment is further altered. In the example of any of FIGS. 6(A) to 6(C), established states of both of a repeat function and a random function are displayed as the OSD character string, which shows that the repeat is set track by track and the random setting is off. The OSD-display positions 32a to 32c shown in FIGS. 6(A) to 6(C) are set to those in FIGS. 4(A) to 4(C), respectively. The OSD character string shown in each of FIGS. 6(A) to 6(C) is displayed only when a user has performed a given operation that directs to display of the repeat function and/or the random function.

FIGS. 7(A) to 7(C) show corresponding display modes to the first to third patterns in FIGS. 5(A) to 5(C) in which the OSD character strings in FIGS. 6(A) to 6(C) are used, respectively. Compared with FIGS. 5(A) to 5(C), FIGS. 7(A) to 7(C) differ in the contents of the OSD character strings. Both caption-display positions 31a to 31c and OSD-display positions 32a to 32c in FIGS. 7(A) to 7(C) are the same as those in FIGS. 5(A) to 5(C).

Although the display processing shown with FIGS. 2 - 7(A) to 7(C) has been described with the three display positions for each of the caption and OSD character string, the present invention is not limited to this example. The present invention can be applied to examples in which a larger number of display positions are set. Further, in setting the display position of a certain OSD character string, an area that does not overlap with the display position of a caption determined at step S4 can be computed to determine the display position of such OSD character string. This way of determination makes it possible to set the display positions for both caption and OSD character string with a higher degree of flexibility.

According to the above embodiment and its modifications, the screen is formed such that an OSD character string is displayed with no overlap with sub-video data such as a caption, even when the both are displayed simultaneously. As a result, video display with superior visibility can be provided.

## Claims

1. A video reproduction apparatus for not only reproducing a video signal comprising a main video and a sub-video to display the video signal but also outputting OSD (On Screen Display) data indicative of predetermined information to display the OSD data, comprising:
a determining device for determining a display position of the sub-video on a displayed screen;
an OSD-display position setting device (20) for setting an OSD-display position of the OSD data not so as to overlap with the display position of the sub-video; and
a superposing device for superposing, on the main video, not only the sub-video at the display position thereof but also the OSD data at the OSD-display position.

2. The video reproduction apparatus of claim 1, wherein the sub-video is a caption on the main video.

3. The video reproduction apparatus of claim 1, wherein the OSD-display position setting device (20) is configured so as to select a certain OSD-display position from a plurality of pre-specified OSD-display positions.

4. The video reproduction apparatus of claim 1, wherein the OSD-display position setting device (20) is configured so as to set the OSD-display position at a side facing to the display position of the sub-video on the displayed screen.

5. The video reproduction apparatus of claim 1, further comprising an operating device (23) used for giving instructions to a display condition of the OSD data, wherein the OSD-display position setting device (20) is configured so as to set the OSD-display position on the basis of the instructions provided from the operating device (23).

6. A video reproduction method for not only reproducing a video signal comprising a main video and a sub-video to display the video signal but also outputting OSD (On Screen Display) data indicative of predetermined information to display the OSD data, comprising the steps of:
determining a display position of the sub-video on a displayed screen;
setting an OSD-display position of the OSD data so as not to overlap with the display position of the sub-video; and
superposing, on the main video, not only the sub-video at the display position thereof but also the OSD data at the OSD-display position.

7. The video reproduction method of claim 6, wherein the sub-video is a caption on the main video.

8. The video reproduction method of claim 6, wherein the OSD-display position setting step is selecting a certain OSD-display position from a plurality of pre-specified OSD-display positions.

9. The video reproduction method of claim 6, wherein the OSD-display position setting step is setting the OSD-display position at a side facing to the display position of the sub-video on the displayed screen.
